# EUROPEAN PATENT SPECIFICATION

(11) **EP 3 491 256 B1**
(45) Date of publication and mention of the grant of the patent: **19.08.2020**
(21) Application number: 17758277.2
(22) Date of filing: 24.07.2017
(51) Int. Cl.: F16B 13/08, F16B 19/10

(54) **WET-FIT FASTENER**
BEFESTIGUNGSELEMENT ZUR VERWENDUNG MIT FEUCHTEN MATERIALIEN
ÉLEMENT DE FIXATION POUR UNE UTILISATION AVEC DES MATERIAUX HUMIDES

(30) Priority: 29.07.2016 GB 201613112
(43) Date of publication of application: 05.06.2019
(73) Proprietor: Kwikbolt Limited, Isleworth, TW7 6ER (GB)
(72) Inventor: NIKLEWICZ, Jan, Isleworth TW7 6ER (GB); CARRAN, Dean, Isleworth TW7 6ER (GB)
(74) Representative: Williams, Ben
(86) International application number: PCT/IB2017/054473
(87) International publication number: WO 2018/020396

(56) References cited:
- EP-A1- 0 182 565
- WO-A1-97/32141
- DE-A1-102006 018 507
- DE-A1-102009 015 436
- GB-A- 2 529 634
- US-A- 1 666 805

## Description

### BACKGROUND

### Field of the Invention

The present invention is concerned with improvements to removable fasteners and is particularly related to removable and re-usable fasteners for use in wet-fit applications, such as joining components that include a sealant or adhesive.

### Description of Related Art

In the manufacture of complex structures such as aircraft frames, removable blind fasteners are used as a temporary fixing. The temporary fixing helps to align the components. After inspection and adjustment as required the removable blind fasteners are removed and permanent blind fasteners installed in the apertures.

Some structures, such as fuel tanks, include a layer of sealant or adhesive between sheet materials. During assembly the inter-sheet viscous adhesive or sealant, or "wet" material can clog the apertures into which the blind fasteners are inserted. The wet material can get into the mechanism of the blind fasteners and shorten their lifespan. The problem to be solved is to find a way of protecting the mechanism of the fastener.

A known swaged collar type fastener is described in US6077012. The fastener includes a flexible end disc attached to its free end. The flexible disc has a slightly larger diameter than the bore in a work-piece through which the fastener is inserted so that the fastener is retained in the bore after insertion. The flexible member pushes some debris out of the bore as the fastener is installed in the bore. The primary function of the end disk is to prevent the fastener from falling out of the bore by catching the edges of the hole and collar to retain the fastener. The end disc must therefore be flexible and a flexible disc would simply smear viscous materials within the bore. This would not be acceptable for applications addressed by the present invention because any material left in the bore, particularly adhesives, may cause the fastener to stick in the hole. Similarly, EP0182565 describe an anchoring bolt with a guide tip. However, the tip is rounded and would not be suitable for clearing debris. An efficient way of clearing all debris from the aperture is required.

### SUMMARY OF THE INVENTION

The present invention overcomes this problem by providing a rigid plunger of substantially the same diameter as the hole, optimised to remove all debris, including viscous adhesives, sealants, swarf and grease, from the bore. This stops unwanted materials getting into the mechanism of the fastener and shortening its lifespan and also removes any material that may harden and prevent removal of the fastener.

A dowelling fastener having a head end and an insertion end, a cylindrical dowelling part, a clamping part and a threaded member, wherein the fastener is provided with a plunger at the insertion end for clearing material from a hole as the fastener is inserted into the hole, wherein the walls of the plunger are cylindrical and the diameter of the plunger is substantially the same as the dowelling part of the fastener, wherein the dowelling part and a the clamping part are held together in use by a the threaded member that passes through each part to draw them together upon its rotation and wherein the plunger is mounted on the tip of the threaded member, wherein the plunger has a front face, arranged such that an edge suitable for scraping is formed between the cylindrical walls of the plunger and the front face, and wherein the cylindrical wall of the plunger has at least one circumferential groove.

The plunger of the present invention is intended specifically for clearing materials from the bore and can therefore have other features optimised for this purpose, including ridges around its periphery.

The plunger may be rigid and may be made of a rigid plastic or soft metal such as brass. The plunger may be permanently fixed to the threaded member or it may be removable. The plunger tip of the dowelling fastener is cylindrical, wherein the side-wall of the plunger tip has at least one groove around its periphery. The groove allows accumulation of any wet material that managed to get past the forward rim of the plunger.

### BRIEF DESCRIPTION OF THE DRAWINGS

Figure 1 is a known fastener without a plunger tip.
Figure 2 is a fastener having a plunger tip in accordance with an embodiment of the invention.
Figure 3 shows how the prior art fastener of Figure 1 undesirably accumulates viscous material around its threads when inserted into an aperture that has viscous material within the aperture.
Figure 4 shows how the plunger tip of the fastener in accordance with an embodiment of the present invention shown in Figure 2 collects the viscous material from the aperture.
Figure 5a shows two work pieces with a layer of viscous material, before they are brought together.
Figure 5b shows the two work pieces of Figure 5a after they are brought together where the viscous material can be seen squeezed into the aperture.
Figure 6a is a perspective view of an embodiment of a plunger tip.
Figures 6b to 6e are cross-sectional views of embodiments of the plunger tip.

### DETAILED DESCRIPTION OF THE PREFERRED EMBODIMENT

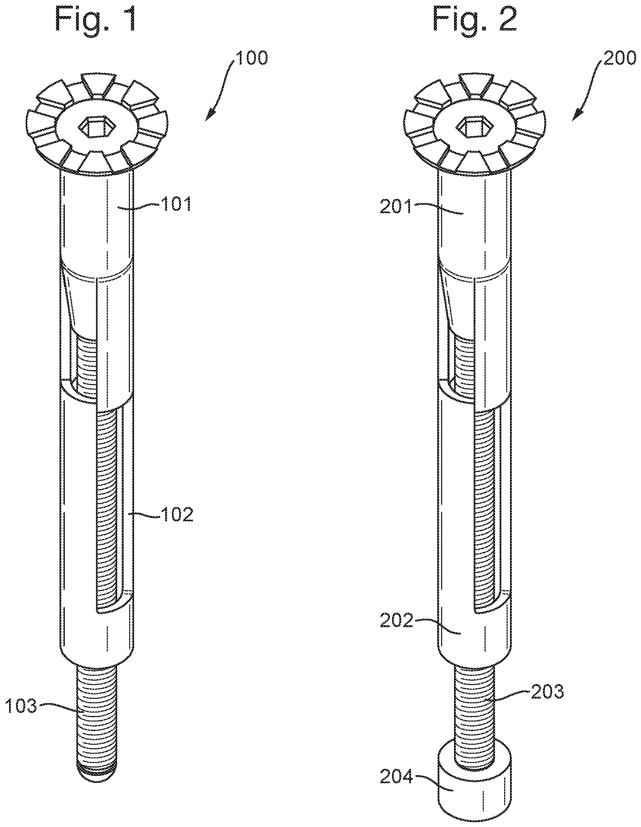

High performance structures, such as those found on modern aircraft, require high precision fabrication techniques. During assembly of, for example, aircraft structures, a series of holes are drilled through the component materials, and permanent fastenings such as rivets are placed and secured. For small structures clamping of the component materials can be along the edge of the materials. For large structures however it is not possible to achieve accurate alignment with this technique. For the assembly of large structures a series of clamping holes are drilled at selected points across the structure. Temporary fasteners are then inserted into these holes to secure the component materials while further holes are drilled to receive permanent rivet fasteners. When rivets have been placed and secured the temporary fasteners are removed and subsequently replaced with permanent rivet fastenings. The number and location of the temporary fastenings will vary between applications, but for a typical wing set, i.e. two complete wings, for a large commercial passenger aircraft, the number of temporary fastenings used can reach around 25,000. It is convenient for such temporary fasteners to be operated from one side of the work-piece only, i.e. to insert and activate the fastener from above the work-piece without having to perform an operation on the underside of the work-piece, for instance screwing or tightening. Not only does one-sided operation simplify the assembly process, it is often the case that the underside of a work-piece is not accessible at all. Fasteners that are operable from a single side of the work-piece are termed "blind" fasteners. A conventional blind fastener is shown in Figure 1; the fastener 100 is comprised of three pieces, having an upper dowelling part 101 that is a close fit with the aperture in the materials to be fastened, a lower clamping part 102 that expands to clamp the materials together and a threaded part 103 that actuates the clamping part on rotation.

Specialised parts of the assembled aircraft structure may require laminations of two or more sheets of materials, sandwiching a layer or layers of "wet" materials, such as adhesives, sealants or resins, including mastic, silicon, epoxies or grease. For example a fuel tank will include a layer of sealant between two sheet materials. These wet materials have the characteristic that they are viscous and sticky and easily coat other materials that they come into contact with and are often difficult to remove. Sometimes they have the additional quality that they harden and set and bond tightly to other materials or bond other materials tightly together.

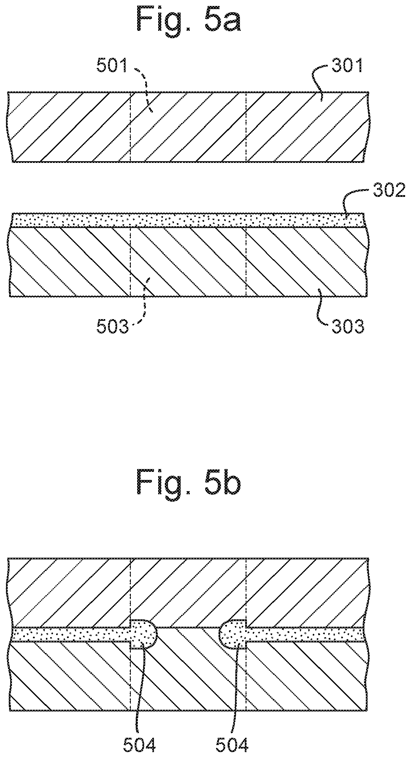

Figures 5a and 5b show the assembly of a laminated structure. In Figure 5a, a lower sheet material 303 with pre-drilled hole 503 is coated with a layer of wet material 302, such as adhesive. An upper sheet material 301 pre-drilled with hole 501 is aligned with the lower sheet material and the two sheets are brought together, as shown in Figure 5b. The result of bringing the two sheets together is that the wet material between the two sheets is squeezed into the aligned holes, which creates a bead of wet material 504 within the aperture. A temporary fastener is then inserted into the aperture to clamp the sheets together while other holes are drilled; permanent fasteners are placed in the new holes, then the temporary fasteners are removed and replaced with permanent fasteners.

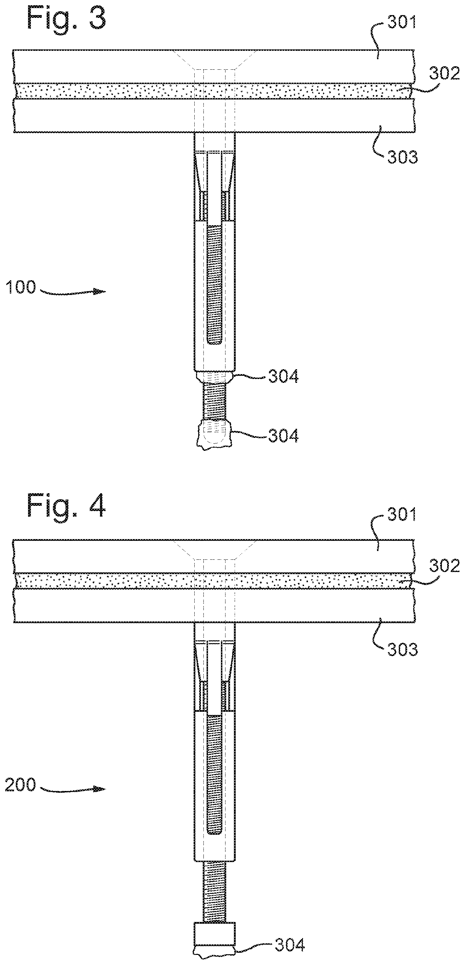

Figure 3 shows a conventional fastener that has been inserted into an aperture clogged with wet material. The fastener 100 has pushed the wet material out of the aperture, but the wet material 304 has collected around the end of the fastener, on the tip of the threads and on other parts of the fastener. This is a problem because when the threaded part is turned for clamping and releasing, the wet material will find its way into the mechanism of the temporary fastener. This can shorten its life, or if the wet material is an adhesive or resin, it sets within the temporary fastener and makes it unusable. Furthermore, not all of the wet material may be removed from the aperture and may collect around the dowelling part 101 of the fastener. If the wet material is an adhesive, it may set around the fastener in the aperture and make it difficult or impossible to remove without damaging the structure that has been assembled.

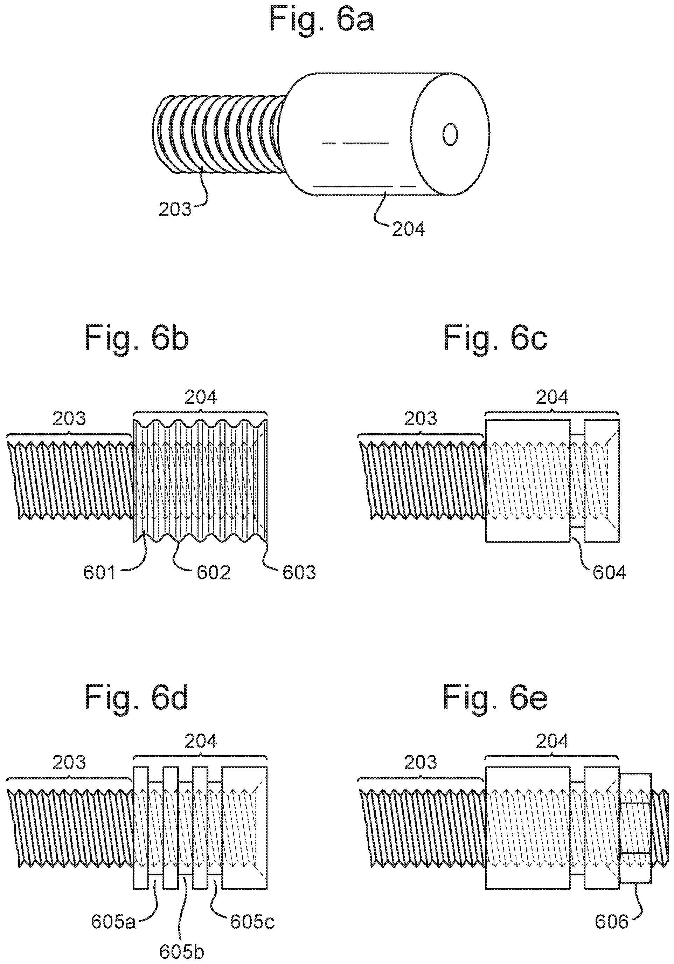

The invention overcomes this problem by providing a plunger 204 attached to the tip 203 of the fastener, an example of which is shown in Figure 6a which is outside the scope of the claims. Figure 2 shows an example of a complete fastener 200 fitted with an example of the plunger 204. The fastener 200 has a dowelling part 201 that is a close fit with the aligned apertures 501 of the work-pieces 301, 303. The fastener 200 has a clamping part 202 that expands and clamps the work-pieces together and a threaded part 203 that connects the dowelling part 201 and the clamping part 202 and when turned causes the clamping part 202 to move toward or away from the dowelling part 201. The plunger 204 is configured to be of substantially the same diameter as the dowelling part 201 of the fastener so that it is a close fit into the aperture 504 in the work-pieces. The plunger 204 scrapes viscous material or debris such as sealant, glue, swarf and grease out of the bore of the receiving hole as the fastener is inserted into the hole.

The plunger 204 is cylindrical, having a circular profile and straight parallel walls, with a front face and a rear face, where the walls meet the front and rear faces at a front rim and a rear rim respectively. The front end is the active end facing away from the fastener and is the end that is first inserted into the aperture in the work-pieces. It may be concave to provide a sharpened front rim and therefore a keen scraping edge to remove viscous or granular materials from the internal walls of the work-piece apertures. The concave front end also acts as a scoop. The plunger 204 is hollow and the threaded member 203 fits into this space. There is a close fit between interior walls of the plunger and the threaded member to ensure that the exterior walls of the plunger are parallel to the walls of the dowelling part of the fastener. The plunger 204 may be fixed to the threaded member 203 using an adhesive such as a potting compound, like epoxy resin.

In use, the apertures 501, 503 in work-pieces 301, 303 are aligned as shown in Figure 5a and the work-pieces brought together, as shown in Figure 5b, creating a bead of viscous material 504 squeezed out into the apertures. A fastener 200 including a plunger 204 is inserted through the aligned apertures, as shown in Figure 4. The plunger 204 is the first element of the fastener 200 to pass through the aligned apertures and it scrapes the viscous material from the walls of the aperture, pushing all of the viscous material ahead leaving the walls of the apertures clean, so that the following elements of the fastener, such as the thread and dowelling parts do not come into contact with significant amounts of the viscous material and remain uncontaminated. A significant amount of the viscous material is an amount that would clog the mechanism of the fastener 200 or reside between the dowelling part and the apertures, that if the viscous material were an adhesive, could set within the fastener or around it and make it difficult to remove from the aperture. The viscous material collected by the plunger may either drop off or be collected by an operator. The viscous material in the aperture is therefore managed and unintended contamination of the work environment is prevented and the aperture is left clean to receive a permanent fastener such as a rivet.

Preferably the plunger is made of a rigid material so that it does not deform but that is softer than the material of the work-pieces so that it does not damage the work-pieces. A preferred material is a rigid plastic, such as ABS. A soft plastic or rubber is less desirable because it is likely to deform and allow viscous material past, leaving a coating of viscous material in the apertures that could set and prevent removal of the fastener from the apertures. If the work-pieces are made of steel, then brass would be a suitable material for the plunger. However, ease and cost of manufacture of the plunger component is a factor, therefore plastic is preferable as it can be injection moulded or 3D printed. It is important that the plunger can be produced to a high tolerance with an accurate diameter and for the plunger to retain this dimension in use. The plunger should be a very close fit into the aperture, much like the dowelling part of the fastener and the diameter of these two components should be substantially the same. The dowelling part of the fastener should be a close fit within the apertures because it needs to be able to align the work-pieces very accurately. The plunger should be a close fit within the apertures so that it effectively removes material from within the bore.

The plunger tip is attached to the threaded member after the fastener itself has been assembled using an adhesive to fix it permanently. Alternatively, it may be desirable to remove and replace the plunger, for example if the plunger becomes worn, then it can be removably retained on the threaded member with a nut 606, as shown in Figure 6e with a stop (not shown in the Figure).

The plunger tip 204 could be provided with performance enhancing features, such as ridges or grooves in the walls, as shown in Figures 6b to 6d. In Figure 6b, the plunger tip 204 is provided with ridges 602 and troughs 601. These may be very shallow, with only 1/10^{th} mm height variation between the ridges and troughs. Multiple ridges may be provided continuously along the length of the plunger as shown in Figure 6b, or groups of ridges provided at either end, or just a single group in the middle or any combination of these.

The troughs formed between the ridges provide a pressure release cavity that can help to scavenge viscous material from the walls of the apertures. A trough immediately behind the front rim 603 of the plunger can provide a sharper leading edge and improve the scraping action of the plunger.

Alternatively a single deep channel 604 can be provided as shown in Figure 6c or multiple channels 605a, 605b, 605c as shown in Figure 6d. The advantage of a deep channel (around ½ mm) is to provide an enhanced sealing effect and a greater space for any viscous material to collect.

Typical diameters of apertures, and therefore plunger diameters could be between ½ cm and 3cm. Typical lengths for the plunger tip could be between ½ cm and 5 cm.

## Claims

1. A dowelling fastener (200) having a head end and an insertion end, a cylindrical dowelling part (201), a clamping part (202) and a threaded member (203),
wherein the fastener (200) is provided with a plunger (204) at the insertion end for clearing material from a hole as the fastener (200) is inserted into the hole, wherein the walls of the plunger are cylindrical and the diameter of the plunger (204) is substantially the same as the dowelling part (201) of the fastener,
wherein the dowelling part (201) and the clamping part (202) are held together in use by the threaded member (203) that passes through each part to draw them together upon its rotation and wherein the plunger (204) is mounted on the tip of the threaded member (203), **characterised in that**
the plunger has a front face, arranged such that an edge suitable for scraping is formed between the cylindrical walls of the plunger and the front face,
and wherein the plunger is cylindrical and has at least one circumferential groove around its periphery.

2. A dowelling fastener in accordance with claim 1, wherein the plunger is rigid.

3. A dowelling fastener in accordance with any preceding claim, wherein the plunger is plastic.

4. A dowelling fastener in accordance with any preceding claim, wherein the plunger is brass.

5. A dowelling fastener in accordance with any preceding claim, wherein the plunger is permanently fixed to the threaded member.

6. A dowelling fastener in accordance with any one of claims 1 to 4, wherein the plunger is removable.

## Patentansprüche

1. Dübelbefestigungsmittel (200) mit einem Kopfende und einem Einführungsende, einem zylindrischen Dübelteil (201), einem Klemmteil (202) und einem Gewindeelement (203),
wobei das Befestigungsmittel (200) an dem Einführungsende mit einem Kolben (204) zur Entfernung von Material aus einem Loch versehen ist, wenn das Befestigungsmittel (200) in das Loch eingeführt wird, wobei die Wände des Kolbens zylindrisch sind, und wobei der Durchmesser des Kolbens (204) im Wesentlichen dem Dübelteil (201) des Befestigungsmittels entspricht,
wobei der Dübelteil (201) und der Klemmteil (202) im Einsatz durch das Gewindeelement (203) zusammengehalten werden, das durch jeden Teil tritt, um diese bei Rotation zusammenzuziehen, und wobei der Kolben (204) an der Spitze des Gewindeelements (203) angebracht ist, **dadurch gekennzeichnet, dass**
der Kolben eine Vorderseite aufweist, die so angeordnet ist, dass eine zum Schaben geeignete Kante zwischen den zylindrischen Wänden des Kolbens und der Vorderseite ausgebildet ist, und wobei der Kolben zylindrisch ist und um dessen Peripherie mindestens eine umfängliche Rille aufweist.

2. Dübelbefestigungsmittel nach Anspruch 1, wobei der Kolben starr ist.

3. Dübelbefestigungsmittel nach einem der vorstehenden Ansprüche, wobei der Kolben aus Kunststoff besteht.

4. Dübelbefestigungsmittel nach einem der vorstehenden Ansprüche, wobei der Kolben aus Messing besteht.

5. Dübelbefestigungsmittel nach einem der vorstehenden Ansprüche, wobei der Kolben dauerhaft an dem Gewindeelement fixiert ist.

6. Dübelbefestigungsmittel nach einem der Ansprüche 1 bis 4, wobei der Kolben entfernbar ist.

## Revendications

1. Élément de fixation par chevillage (200) ayant une extrémité de tête et une extrémité d'insertion, une partie de chevillage (201) cylindrique, une partie de serrage (202) et un élément fileté (203),
l'élément de fixation (200) étant muni d'un piston (204) au niveau de l'extrémité d'insertion pour enlever de la matière d'un trou lorsque l'élément de fixation (200) est inséré dans le trou, les parois du piston étant cylindriques et le diamètre du piston (204) étant sensiblement le même que la partie de chevillage (201) de l'élément de fixation,
la partie de chevillage (201) et la partie de serrage (202) étant maintenues ensemble lors de l'utilisation par l'élément fileté (203) qui passe à travers chaque partie pour les tirer ensemble lors de sa rotation et le piston (204) étant monté sur la pointe de l'élément fileté (203), **caractérisé en ce que**
le piston a une face avant, disposée de sorte qu'un bord approprié pour le raclage soit formé entre les parois cylindriques du piston et la face avant, et le piston étant cylindrique et ayant au moins une rainure circonférentielle sur sa périphérie.

2. Élément de fixation par chevillage selon la revendication 1, la partie piston étant rigide.

3. Élément de fixation par chevillage selon l'une quelconque des revendications précédentes, le piston étant en plastique.

4. Élément de fixation par chevillage selon l'une quelconque des revendications précédentes, le piston étant en laiton.

5. Élément de fixation par chevillage selon l'une quelconque des revendications précédentes, le piston étant fixé de manière permanente à l'élément fileté.

6. Élément de fixation par chevillage selon l'une quelconque des revendications 1 à 4, le piston étant amovible.
